# EUROPÄISCHE PATENTANMELDUNG

(11) **EP 4 617 529 A1**
(43) Veröffentlichungstag der Anmeldung: **17.09.2025**
(21) Anmeldenummer: 24163376.7
(22) Anmeldetag: 13.03.2024
(51) Int. Cl.: F16H 57/04

(54) **STIRNRADGETRIEBE**

(71) Anmelder: Deere & Company, Moline, IL 61265 (US)
(72) Erfinder: MOSCOSO, JAVIER, 68163 Mannheim (DE); PEREZ RAMIREZ, JAVIER, 68163 Mannheim (DE); BALLESTER, HECTOR, 68163 Mannheim (DE)
(74) Vertreter: Reichert, Christian

(57) **Zusammenfassung**

Es wird ein Stirnradgetriebe (10) offenbart. Das Stirnradgetriebe (10) umfasst ein erstes Zahnrad (16) und ein zweites Zahnrad (18), wobei die Zahnräder (16, 18) in einem Wälzbereich (36) miteinander in Eingriff stehen und auf parallel zueinander ausgerichteten Drehachsen (20, 22) geführt werden, und ein Getriebegehäuse, mit die Zahnräder stirnseitig und umfangsseitig umschließenden Gehäusewandungen (24, 26, 28, 30), wobei das Getriebegehäuse zumindest teilweise mit Schmierflüssigkeit befüllbar ist und wobei das zweite Zahnrad (18) rotierend durch die Schmierflüssigkeit führbar und Schmierflüssigkeit in Richtung des Wälzbereichs (36) beförderbar ist. Bezogen auf den Drehsinn der Zahnräder (16, 18) unmittelbar vor dem Wälzbereich (36) ist wenigstens eine Deflektoranordnung (38, 39, 39') angeordnet, und derart ausgebildet, dass eine Teilmenge der durch das zweite Zahnrad (18) zum Wälzbereich (36) beförderbaren Schmierflüssigkeit in Richtung wenigstens einer der stirnseitig die Zahnräder (16, 18) umgebenden Gehäusewandung (24, 26) abgeleitet wird.

## Beschreibung

Die Erfindung betrifft ein Stirnradgetriebe, mit einem ersten Zahnrad und einem zweiten Zahnrad, wobei die Zahnräder in einem Wälzbereich miteinander in Eingriff stehen und auf parallel zueinander ausgerichteten Drehachsen geführt werden, und einem Getriebegehäuse, mit die Zahnräder stirnseitig und umfangsseitig umschließenden Gehäusewandungen, wobei das Getriebegehäuse zumindest teilweise mit Schmierflüssigkeit befüllbar ist und wobei das zweite Zahnrad rotierend durch die Schmierflüssigkeit führbar und Schmierflüssigkeit in Richtung des Wälzbereichs beförderbar ist.

US6267203 offenbart ein verbessertes Verfahren zum Abführen von Wärme aus einem Schmiermittel in einer Kegelradgetriebeanordnung. Es umfasst die Verwendung eines Abweisers in dem Achsgehäuse der Kegelradanordnung. Der Abweiser ist an der Achsgehäusewandung ausgebildet, derart, dass das Schmiermittel durch einen Zahnkranz gegen den Abweiser geworfen und durch diesen nach außen zu den Achsenden der Achsbaugruppe geleitet wird. Auf diese Weise wird das Schmiermittel einer größeren Oberfläche ausgesetzt und die Kühleffizienz dieses Systems stark verbessert. Der Abweiser ist für eine Kegelradanordnung mit einem Achsgehäuse mit großem Volumen bzw. Hohlraum ausgebildet und leitet das auf ihn treffende Schmiermittel seitlich in die Achsenden. Bei einer Stirnradgetriebeanordnung mit einem Getriebegehäuse mit kleiner kompakter Bauweise sind zur Verfügung stehende Hohlräume oftmals begrenzt, so dass hier weitere Maßnahmen in Ergänzung getroffen werden müssen, um eine Überhitzung des Schmiermittels zu vermeiden.

Ein Stirnradgetriebe in kompakter Bauweise zeichnet sich insbesondere dadurch aus, dass die Gehäusewandung in unmittelbarer Nähe an die umwälzenden Zahnräder angrenzt oder mit anderen Worten, der Hohlraum des Getriebegehäuses möglichst klein ausfällt. Somit steht auch nur wenig Raum für die Aufnahme von Schmiermittel zur Verfügung, so dass sich die geringe Menge an Schmiermittel in der Regel auch relativ schnell erhitzt. Des Weiteren liegt aufgrund des geringen Hohlraums der Füllstand des Schmiermittelsumpfs relativ hoch, so dass ein großer Teil eines betroffenen umwälzenden Zahnrads tief durch den Schmiermittelsumpf geführt wird. Dies wiederum führt dazu, dass relativ viel Schmiermittel oder Schmieröl durch das umwälzende Zahnrad transportiert und aufgewirbelt wird. Damit ergibt sich die Herausforderung, zum einen ausreichend Schmiermittel in und durch den Wälzbereich zu leiten, zum anderen aber auch die Menge an Schmiermittel zu begrenzen die dorthin geleitet wird, da das Schmiermittel durch das Kämmen der Zahnräder im Wälzbereich mitunter stark erhitzt wird. Um einer Überhitzung des Schmiermittels entgegenzuwirken ist es zudem hilfreich, eine möglichst große Wärmeabsorptionsfläche an der Gehäusewandung zu schaffen, durch welche die Wärme abgeführt werden kann, um ein ausreichendes Abkühlen des Schmiermittels zu gewährleisten. Dabei ist zu berücksichtigen, dass das Schmiermittel durch die Umwälzbewegung des durch den Schmiermittelsumpf geführten Zahnrads überwiegend nur in Umfangsrichtung transportiert wird und die Gehäusewandung in Umfangsrichtung des Zahnrads nur einen relativ kleinen Bereich der Umfangsfläche bildet und somit ein Großteil des Schmiermittels nur mittels einer relativ kleinen Umfangsfläche der Gehäusewandung, die zur Wärmeabführung genutzt wird, gekühlt werden kann.

Die der Erfindung zugrunde liegende Aufgabe wird darin gesehen, ein Stirnradgetriebe der eingangs genannter Art anzugeben, durch welches die vorgenannten Probleme, insbesondere eine Überhitzung des Schmiermittels, überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Stirnradgetriebe der eingangs genannter Art derart ausgebildet, dass bezogen auf den Drehsinn der Zahnräder unmittelbar vor dem Wälzbereich wenigstens eine Deflektoranordnung angeordnet ist. Die Deflektoranordnung ist derart ausgebildet, dass wenigstens eine Teilmenge der durch das zweite Zahnrad zum Wälzbereich beförderbaren Schmierflüssigkeit in Richtung wenigstens einer der stirnseitig die Zahnräder umgebenden Gehäusewandung abgeleitet wird.

Durch die Erfindung wird das Schmiersystem für ein mit Schmiermittel bzw. Schmieröl laufendes Stirnradgetriebe maßgeblich verbessert, so dass eine maximal kompakte Bauweise ermöglicht wird und die Ausbildung der Gehäusewandung in unmittelbarer Nähe der Zahnräder erfolgen kann. Durch die Erfindung lassen sich auf einfache und kostengünstige Weise die oben genannten Probleme, die zu einer Überhitzung des Schmiermittels führen beheben. Insbesondere wird vermieden, dass die gesamte von dem Zahnrad transportierte Menge an Schmiermittel in den Wälzbereich gelangt. Mit anderen Worten, ein Großteil des durch das Zahnrad transportierte Schmiermittel wird von der Deflektoranordnung vor Eintritt in den Wälzbereich zu den stirnseitigen Gehäusewandungen hin abgeleitet, geblockt oder abgelenkt. Damit gelangt weniger Schmiermittel in den Wälzbereich selbst, was zu einer geringeren Gesamterwärmung des Schmiermittels führt. Das von der Deflektoranordnung in Richtung der stirnseitigen Gehäusewandungen abgeleitete Schmiermittel kann dort an einer im Vergleich zur umfangsseitigen Gehäusewandung deutlich größeren Fläche mit insgesamt höherer Wärmeabfuhr effizienter abkühlen. Die Leistung, Zuverlässigkeit des Stirnradgetriebes und auch Haltbarkeit und Effizienz des Schmiermittels wird dadurch insgesamt verbessert und der Wartungsaufwand verringert.

Die Deflektoranordnung kann einen oder mehrere Befestigungsbereiche aufweisen, die an einer stirnseitigen Gehäusewandung gehaltert bzw. befestigt ist. Die Halterung oder Befestigung kann beispielsweise mittels Schrauben erfolgen. Es ist durchaus denkbar, die Deflektoranordnung im Gießverfahren einheitlich mit der Gehäusewandung auszuformen. Auch eine Schweißkonstruktion ist möglich, so dass an Stelle der Schrauben als Befestigungsmittel eine Schweißverbindung gewählt wird.

Ausgehend von einem Befestigungsteil der Deflektoranordnung können sich ein oder mehrere Deflektorteile erstrecken, die in den Getrieberaum hineinragen und bestimmte Bereiche des Stirnradgetriebes, beispielsweise den Wälzbereich der Zahnräder zumindest teilweise abdecken. Die Deflektorteile können einen Finger, Steg Blende, Flügel oder eine andere Art von Profil bilden und über die Umfangsfläche des zweiten Zahnrads ragen und den Schmiermitteltransport maßgeblich beeinflussen bzw. zumindest teilweise unterbinden oder blockieren. So wird das durch Rotation des Zahnrads in Richtung des Wälzbereichs transportierte Schmiermittel durch die Deflektorteile geblockt und abgelenkt. Das Maß, mit welchem die Deflektorteile über den Umfangsbereich ragen, kann dabei variieren und hängt davon ab, wieviel des durch Rotation transportierten Schmiermittels abgelenkt bzw. blockiert werden soll. So kann beispielsweise eine gewisse Mindestmenge an Schmiermittel ungehindert in den Wälzbereich gelangen, wenn der Deflektorteil nur eine Teilstrecke der gesamten Breite des Zahnrads quer zur Umfangsrichtung überragt bzw. abdeckt. So kann der Deflektorteil beispielsweise nur bis zur Hälfte der Zahnradbreite über den Umfangsbereich ragen (oder auch mehr oder weniger).

Der wenigstens eine Deflektorteil kann einen ersten Deflektorteil mit einer senkrecht zur Umfangsfläche des zweiten Zahnrads ausgerichteten Leitfläche aufweisen, wobei die Leitfläche, ausgehend vom Befestigungsteil entgegen der Drehrichtung des zweiten Zahnrades verlaufend, einen spitzen Winkel mit der stirnseitigen Gehäusewandung einschließt. Durch den mit der Gehäusewandung eingeschlossenen spitzen Winkel wird das gegen die Leitfläche des ersten Deflektorteils strömende Schmiermittel zu den Seiten hin abgelenkt und an die stirnseitige Gehäusewandung befördert. Damit wird ein Teil des durch die Rotation des Zahnrades transportierten Schmiermittels vor dem Eintritt in den Wälzbereich an die großflächigen stirnseitigen Gehäusewandungen geleitet, an denen es eine effizientere Abkühlung erfährt als an den relativ kleinflächigen umfangsseitigen Gehäusewandungen. Zum einen wird dadurch weniger Schmiermittel durch Reibungswärme im Wälzbereich erhitzt und zum anderen mehr Schmiermittel einer verbesserten Kühlung unterzogen.

Der wenigstens eine Deflektorteil kann zudem auch einen zweiten Deflektorteil mit einer ersten, senkrecht zur Umfangsfläche des zweiten Zahnrads ausgerichteten, Leitfläche aufweisen, wobei die Leitfläche, ausgehend vom Befestigungsteil in Drehrichtung des zweiten Zahnrades verlaufend, einen stumpfen Winkel mit der stirnseitigen Gehäusewandung einschließt. Die Leitfläche des zweiten Deflektorteils bewirkt, dass ein Teil der Schmierflüssigkeit, die nicht an der Leitfläche des ersten Deflektorteils abgeblockt bzw. abgeleitet wird, an der Leitfläche des zweiten Deflektorteils gezielt in Richtung eines mittleren Bereiches der Umfangsfläche des zweiten Zahnrades geleitet bzw. abgelenkt wird. Die erste Leitfläche des zweiten Deflektorteils mündet zudem angrenzend zum Wälzbereich und bewirkt, dass das durch die erste Leitfläche abgelenkte Schmiermittel gezielt in den Wälzbereich geleitet wird.

Der zweite Deflektorteil kann zudem einen Defklektorbereich mit einer weiteren Leitfläche umfassen, die sich ausgehend von der ersten Leitfläche des zweiten Deflektorteils abgewinkelt in Richtung der umfangsseitigen Gehäusewandung bzw. in eine vom Wälzbereich abgewandte Richtung erstreckt und einen stumpfen Winkel mit der ersten Leitfläche des zweiten Deflektorteils einschließt. Der die weitere Leitfläche umfassende Defklektorbereich des zweiten Deflektorteils trennt damit wenigstens teilweise einen das erste Zahnrad umgebenden Getrieberaum bzw. Gehäusebereich von einem das zweite Zahnrad umgebenden Getrieberaum bzw. Gehäusebereich, bzw. grenzt die beiden Getrieberäume bzw. Gehäusebereiche wenigstens teilweise voneinander ab. Die weitere Leitfläche bewirkt, dass seitens des zweiten Zahnrads in Drehrichtung transportiertes Schmiermittel im Wesentlichen nicht in den Getrieberaum des ersten Zahnrades gelangt. Der Eintritt von seitens des zweiten Zahnrads in Drehrichtung transportiertem Schmiermittel in den das zweite Zahnrad umgebenden Getrieberaum wird dadurch größtenteils blockiert oder verhindert bzw. maßgeblich reduziert. Die weitere Leitfläche mündet zudem, ähnlich zu der ersten Leitfläche, ebenfalls angrenzend zum Wälzbereich und bewirkt, dass das durch die weitere Leitfläche in die Mitte der Umfangsfläche des zweiten Zahnrads abgelenkte Schmiermittel gezielt in den Wälzbereich geleitet wird.

Der erste Deflektorteil ist in Drehrichtung des zweiten Zahnrads vorzugsweise vor dem zweiten Deflektorteil angeordnet. Eine Teilmenge an Schmiermittel, welche durch Rotation des zweiten Zahnrads in Richtung des ersten Deflektorteils transportiert wird, jedoch an diesem vorbei gelangt, wird zumindest teilweise durch den zweiten Deflektorteil abgelenkt und dadurch zum einen entlang der ersten Leitfläche und in Richtung des mittleren Umfangsbereich des zweiten Zahnrads sowie in Richtung des Wälzbereiches, und zum anderen entlang der weiteren Leitfläche in Richtung der umfangsseitigen Gehäusewandung geleitet. Insbesondere wird dadurch eine wesentliche Menge an Schmiermittel reduziert bzw. geblockt, die am Wälzbereich vorbei in den das erste Zahnrad umgebenden Getrieberaum gelangt.

Die oben beschriebene wenigstens eine Deflektoranordnung kann eine erste und eine zweite Defllektoranordnung umfassen. Die beiden Deflektoranordnungen sind im Wesentlichen spiegelsymmetrisch ausgebildet und gegenüberliegend jeweils an einer der stirnseitig die Zahnräder umgebenden Gehäusewandungen angeordnet. Wie oben bereits erwähnt, kann das Maß, mit denen die jeweiligen ersten und zweiten Deflektorteile der ersten und zweiten Deflktoranordnung über den Umfangsbereich des zweiten Zahnrades ragen, variieren und insbesondere auch so bemessen sein, dass sich zwischen den gegenüberliegenden freien Enden der jeweiligen Deflektorteile bzw. zwischen den jeweiligen gegenüberliegenden Leitflächen ein mehr oder weniger großer Durchlassspalt ausbildet, der einen ungehinderten Durchlass einer Restmenge an Schmiermittel ermöglicht. Je nach Ausgestaltung kann dieser Durchlassspalt auch gänzlich entfallen, so dass sich die freien Enden der jeweiligen Deflektorteile berühren.

Wie oben erwähnt kann zwischen der ersten und der zweiten Deflektoranordnung an den freien Enden des jeweiligen ersten und/oder zweiten Deflektorteils ein Durchlassspalt ausgebildet und so bemessen sein, dass eine zur Schmierung ausreichende Teilmenge an Schmiermittel in den Wälzbereich gelangt. Die Größe bzw. Weite des Durchlassspalts kann von Fall zu Fall variieren und kann auf die konstruktiven Gegebenheiten und Erfordernisses des Stirnradgetriebes angepasst sein. Es kann demnach zweckmäßig sein, einen Durchlassspalt zwischen den ersten Deflektorteilen vorzusehen, durch welchen eine erste Teilmenge an aufgewirbelten und vom ersten Zahnrad in Drehrichtung transportiertem Schmiermittel ungehindert passieren kann, während eine zweite Teilmenge von den Leitflächen der ersten Deflektorteile in Richtung der stirnseitigen Gehäusewandungen abgeleitet wird. Eine weitere Teilmenge gelangt mehr oder weniger ungehindert über die ersten Deflektorteile hinweg in einen Umfangsbereich des zweiten Zahnrads der zwischen den ersten und zweiten Deflektorteilen ausgebildet ist. Die den Durchlassspalt passierte Teilmenge an Schmiermittel sowie die Teilmenge an Schmiermittel die über die ersten Deflektorteile hinweg gelangt sammelt sich somit in dem genannten Umfangsbereich des zweiten Zahnrads der zwischen den ersten und zweiten Deflektorteilen ausgebildet ist. Die beiden Teilmengen an Schmiermittel die in diesem Umfangsbereich gelangen, werden durch die Drehbewegung des zweiten Zahnrads den zweiten Deflektorteilen zugeführt und dort, wie oben beschrieben, zu einem Mindestteil, durch die ersten und zweiten Leitflächen der zweiten Deflektorteile und durch den dort vorgesehenen Durchlassspalt zwischen den Deflektorteilen, gezielt in Richtung des Wälzbereiches geleitet. Ein Restteil wird dabei, wie oben beschrieben, durch die weiteren Leitflächen der zweiten Deflektorteile in Richtung der umfangseitigen Gehäusewandung abgelenkt. Somit gelangt nur ein limitierter Mindestteil an Schmiermittel gezielt in den Wälzbereich. Durch Anpassung der Geometrie der Deflektorteile, insbesondere der Länge, Höhe, Form und Abwinkelung oder Ausrichtung zum Befestigungsteil bzw. Abwinkelung oder Ausrichtung zu den stirnseitigen und umfangsseitigen Gehäusewandungen, sowie durch Anpassung des Durchlassspalts kann die in den Wälzbereich geführte Mindestteilmenge gezielt festgelegt, eingestellt und auf eine zur Schmierung des Stirnradgetriebes notwendige Menge begrenzt werden.

Die Deflektoranordnung unterbricht den Schmiermitteltransport der durch Rotation des zweiten Zahnrads und die dadurch aufgewirbelte und in Drehrichtung mitgeführte Menge an Schmiermittel hervorgerufen wird. Damit wird die Menge an Schmiermittel begrenzt, die in den Wälzbereich und in den das erste Zahnrad umgebenden Getrieberaum gelangt. Dabei wird nur eine Mindestteilmenge des durch das zweite Zahnrad in Drehrichtung transportierten Schmiermittels gezielt in den Wälzbereich geleitet, und eine Teilmenge in Richtung der stirnseitigen Gehäusewandungen geleitet. Eine weitere Teilmenge wird gezielt vom Eintritt in den das erste Zahnrad umgebenden Getrieberaum gehindert und in Richtung der umfangsseitigen Gehäusewandungen geleitet. Aufgrund der reduzierten Menge an Schmiermittel das in und durch den Wälzbereich befördert wird, reduziert sich die Gesamterwärmung des Schmiermittels. Durch Ablenkung und Ableitung des Schmiermittels an die stirnseitigen Gehäusewandungen mit großer Oberfläche wird zudem eine erhöhte Wärmeabsorption und damit eine verbesserte, effizientere Kühlung des Schmiermittels erzielt. Insgesamt ergibt sich hinsichtlich einer Überhitzungsproblematik des Schmiermittels eine deutlich verbesserte Wärmebilanz, nämlich weniger Wärmeerzeugung und bessere Kühlung. Zudem wird durch die vorgeschlagene Geometrie der Deflektoranordnung mit zwei Deflektorteilen und insbesondere durch die weitere Leitfläche der Zufluss von Schmiermittel in den Getrieberaum des ersten Zahnrades reduziert und eine diesbezügliche Überströmung vermieden. In Summe ergeben sich mehrere Vorteile, insbesondere eine optimierte und gezieltere Zuleitung von Schmiermittel in den zu schmierenden Wälzberiech, eine insgesamt niedrigere Erhitzung des Schmiermittels, eine höhere Dichtungssicherheit durch weniger Überströmung und geringere Schmiermitteltemperatur und, nicht zuletzt dadurch auch, ein geringerer Wartungsaufwand mit längeren Wartungsintervallen und mit einer längeren Lebenszeit von Dichtungen und Schmiermittel.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Seitenansicht eines geschlossenen Stirnradgetriebes,
- Fig. 2: eine Seitenansicht des Stirnradgetriebes im geöffneten Zustand mit einer Zahnradpaarung und Deflektoranordnung,
- Fig. 3: eine vergrößerte perspektivische Teilansicht der Zahnradpaarung und Deflektoranordnung des Stirnradgetriebes aus den Figuren 1 und 2,
- Fig. 4: eine weitere vergrößerte perspektivische Teilansicht der Zahnradpaarung und Deflektoranordnung des Stirnradgetriebes aus den Figuren 1 und 2 und
- Fig. 5: eine vergrößerte perspektivische Detailansicht der Deflektoranordnung aus Figur 4.

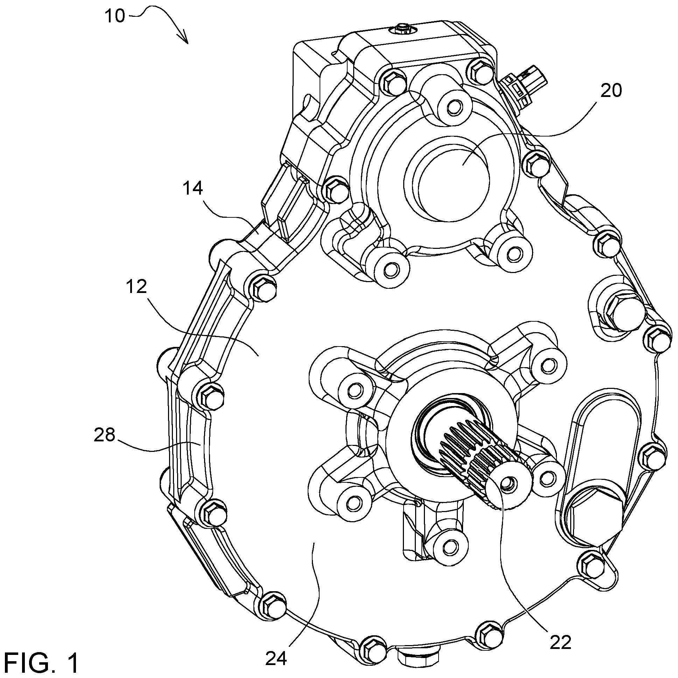

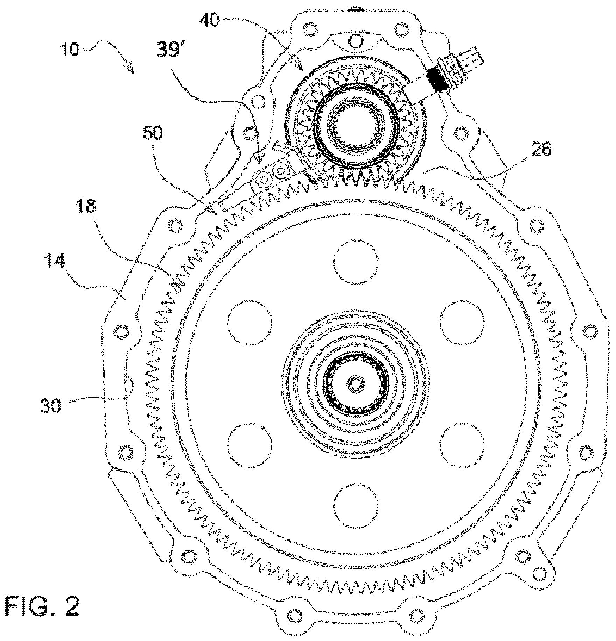

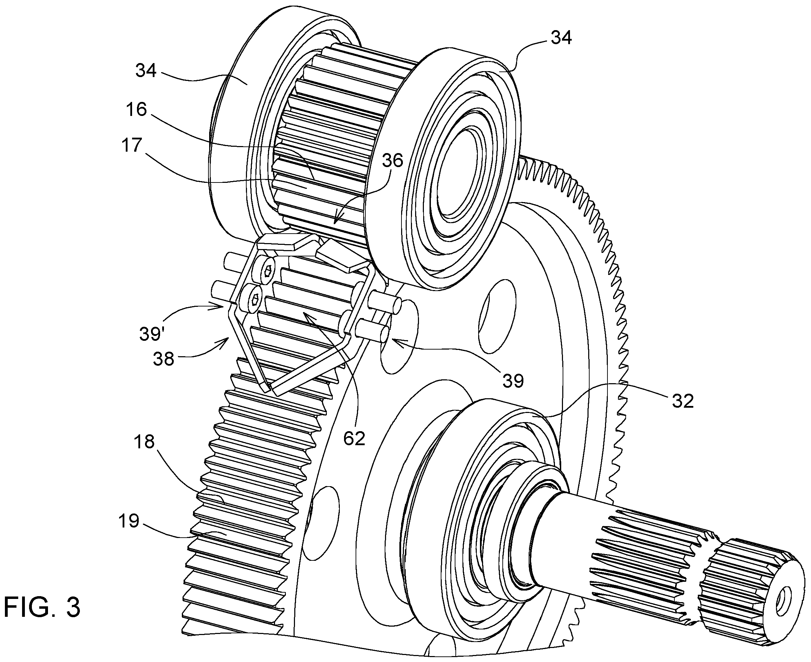

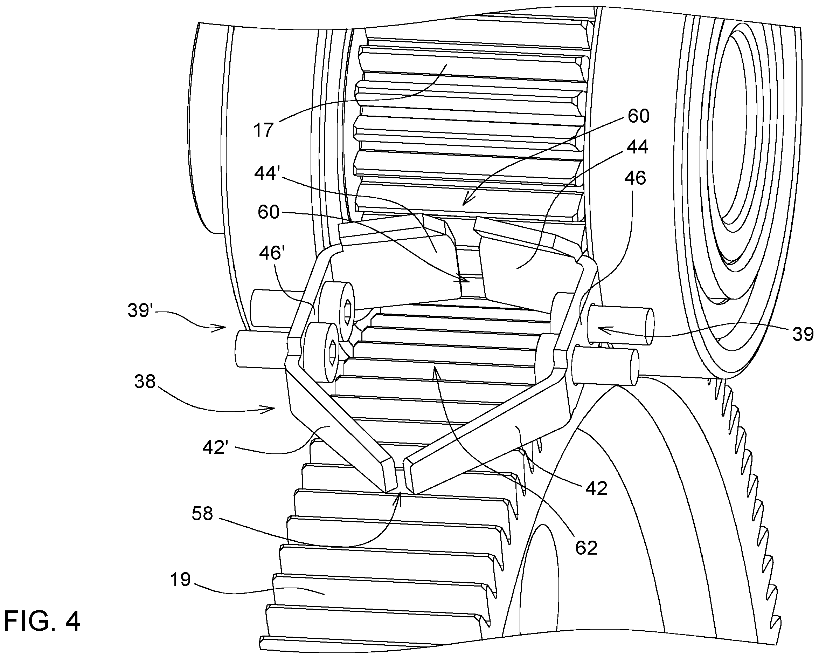

Anhand der Figuren 1 bis 5 wird ein Stirnradgetriebe 10 beschrieben, welches beispielsweise in landwirtschaftlichen Erntemaschinen im Antriebsstrang für Erntevorsätze zum Einsatz kommt. Ein solches Stirnradgetriebe 10 weist eine relativ kompakte Bauweise auf, mit einer ersten und einer zweiten Getriebegehäusehälfte 12, 14 in welchem eine erstes und ein zweites Zahnrad 16, 18 auf einer ersten und einer zweiten parallel zueinander ausgerichteten Drehachse 20, 22 angeordnet sind. Die Getriebegehäusehälften 12, 14 weisen jeweils eine stirnseitige Gehäusewandung 24 und 26 und eine umfangsseitige Gehäusewandung 28 und 30 auf. Die Bezeichnung "umfangsseitig" und "stirnseitig" bezieht sich auf die Seiten der Zahnräder, an denen die Umfangsflächen und die Stirnflächen der ersten und zweiten Zahnräder 16, 18 ausgebildet sind, wobei die Zahnräder 16, 18 umfangsseitig mit einer Vielzahl von Zähnen 17, 19 versehen sind und die senkrecht zu den Drehachsen 20, 22 ausgerichteten Flächen and den Vorder- und Rückseiten der Zahnräder 16, 18 die Stirnflächen bzw. Stirnseiten darstellen.

Die Getriebegehäusehälften 12, 14 sind mit einer Vielzahl von auf dem Umfang verteilte Gewindebolzen miteinander verschraubt. Die Drehachsen 20, 22 sind zudem mit Radialwellendichtringen 32, 34 versehen. Das Stirnradgetriebe 10 ist zwecks Schmierung und Kühlung zu einem gewissen Maß mit einem Schmiermittel befüllt (nicht gezeigt), wobei das zweite Zahnrad 18 in einem unteren Bereich (einem unterhalb der Drehachse 14 befindlicher Bereich des zweiten Zahnrads 18) durch ein Schmiermittelreservoir (Sumpf) geführt wird und durch Rotation das Schmiermittel mit den Zähnen 19 aufwirbelt und in Drehrichtung in Richtung des ersten Zahnrads 16 in den oberen Teil des Stirnradgetriebes befördert. Die Zähne 17 des ersten Zahnrads 16 und die Zähne 19 des zweiten Zahnrads 18 stehen dabei in einem Wälzbereich 36 miteinander in Eingriff, wobei das durch das zweite Zahnrad 18 beförderte Schmiermittel bis in den Wälzbereich 36 befördert bzw. auch durch diesen hindurch transportiert wird und diesen entsprechend schmiert.

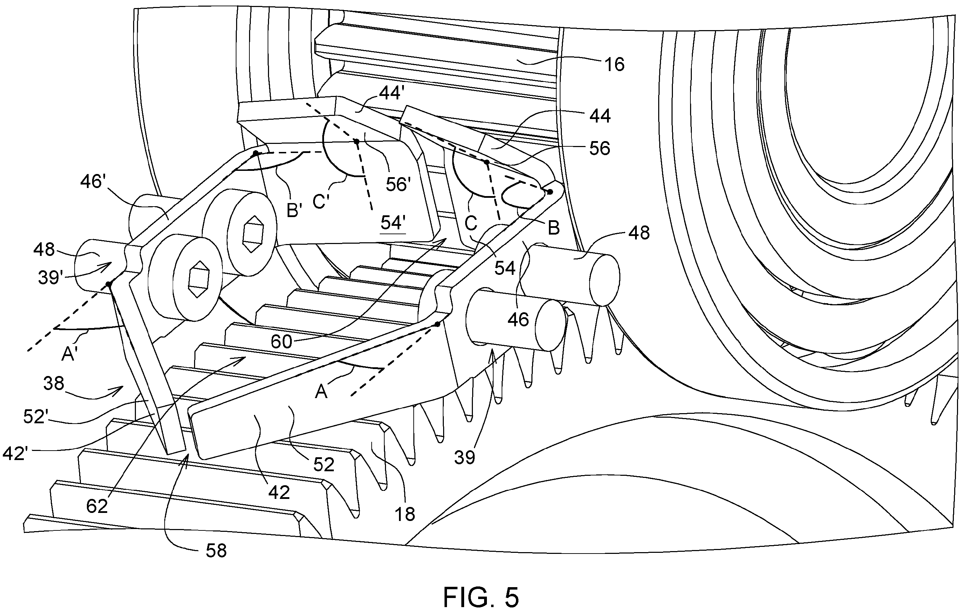

In Drehrichtung des zweiten Zahnrads 18 unmittelbar vor dem Wälzbereich 36 ist eine Deflektoranordnung 38 vorgesehen, die dazu dient, dass ein Teil des vom Zahnrad 18 transportierten Schmiermittels an die stirnseitigen Gehäusewandungen 24, 26 abgelenkt bzw. abgeleitet wird. Dadurch wird erzielt, dass weniger Schmiermittel in den Wälzbereich 36 gelangt und sich damit auch weniger Schmiermittel dort durch den Wälzvorgang erwärmen kann. Durch das Ableiten eines Großteils an Schmiermittel an die stirnseitigen Gehäusewandungen 24, 26, wird zudem eine größere Wärmeabsorption für das zu kühlende Schmiermittel bereitgestellt, da die stirnseitigen Gehäusewandungen 24, 26 eine um ein Vielfaches größere Absorptionsfläche als die umfangsseitigen Gehäusewandungen 28, 30 aufweisen. Insgesamt erhitzt sich das Schmiermittel weniger stark und wird auch stärker abgekühlt. Die Wärmebelastung des Schmiermittels wird dadurch deutlich reduziert. Darüber hinaus sorgt die Deflektoranordnung 38 auch dafür, dass ein Großteil des in den Bereich der Deflektoranordnung 38 transportierten Schmiermittels von einem Eintritt in einen das erste Zahnrad 16 umgebenden Gehäusebereich 40 gelangt, wie weiter unten anhand Figur 5 ausführlicher erklärt wird. Dadurch wird ein Überströmen des das erste Zahnrad 16 umgebenden Gehäusebereichs 40 vermieden.

In Figur 5 ist eine detaillierte Darstellung der Deflektoranordnung 38 abgebildet. Die Deflektoranordnung 38 ist in Drehrichtung des zweiten Zahnrads 18 unmittelbar vor dem Wälzbereich 36 positioniert. Die Deflektoranordnung 38 ist in dem gezeigten Beispiel zweiteilig mit einer ersten und einer zweiten Deflektoranordnung 39, 39' ausgeführt, wobei die beiden Deflektoranordnungen 39, 39' spiegelsymmetrisch ausgebildet sind und gegenüber angeordnete erste Deflektorteile 42, 42' und gegenüber angeordnete zweite Deflektorteile 44, 44' aufweisen, die sich jeweils ausgehend von gegenüber angeordneten Befestigungsteilen 46, 46' in Richtung des zweiten Zahnrads 18 erstrecken. Die Befestigungsteile 46, 46` der Deflektoranordnung 38 sind jeweils an einer der stirnseitigen Gehäusewandungen 24, 26 mittels Gewindebolzen 48 befestigt und im Wesentlichen parallel zu den stirnseitigen Gehäusewandungen 24, 26 ausgerichtet.

Ausgehend von den Befestigungsteilen 46, 46` der Deflektoranordnung 38 erstrecken sich die Deflektorteile 42, 42' entgegen dem Drehsinn des zweiten Zahnrads 18 über die Umfangsfläche des zweiten Zahnrads 18 und ragen in den das zweite Zahnrad 18 umgebenden Gehäusebereich 50 hinein. Die Deflektorteile 42, 42' weisen eine senkrecht zur Umfangsfläche des zweiten Zahnrads 18 ausgerichteten Leitfläche 52, 52' auf, wobei die Leitfläche 52, 52', ausgehend vom Befestigungsteil 46, 46' entgegen der Drehrichtung des zweiten Zahnrades verlaufend, einen spitzen Winkel A, A' mit der stirnseitigen Gehäusewandung 24, 26 einschließt. Durch den mit der stirnseitigen Gehäusewandung 24, 26 einschließenden Winkel A, A' wird das gegen die Leitfläche52, 52` des ersten Deflektorteils 42, 42' strömende Schmiermittel zu den Stirnseiten des Stirnradgetriebes 10 hin abgelenkt und an die jeweilige stirnseitige Gehäusewandung 24, 26 befördert. Damit wird ein Teil des durch die Rotation des zweiten Zahnrades 18 transportierten Schmiermittels vor dem Eintritt in den Wälzbereich 36 an die großflächigen stirnseitigen Gehäusewandungen 24, 26 geleitet, an denen es eine effizientere Abkühlung erfährt als an den relativ kleinflächigen umfangsseitigen Gehäusewandungen 28, 30. Zum einen wird dadurch weniger Schmiermittel durch Reibungswärme im Wälzbereich 36 erhitzt und zum anderen mehr Schmiermittel einer verbesserten Kühlung unterzogen.

Der zweite Deflektorteil 44, 44' weist eine erste, senkrecht zur Umfangsfläche des zweiten Zahnrads 18 ausgerichtete Leitfläche 54, 54' auf, wobei die Leitfläche 54, 54', ausgehend vom Befestigungsteil 46, 46' in Drehrichtung des zweiten Zahnrades verlaufend, einen stumpfen Winkel mit der stirnseitigen Gehäusewandung 24, 26 einschließt. Der zweite Deflektorteil 44, 44' bewirkt, dass ein Teil der Schmierflüssigkeit, die nicht an der Leitfläche 52, 52` des ersten Deflektorteils 42, 42' abgeblockt bzw. abgeleitet wurde, an der Leitfläche 54, 54` des zweiten Deflektorteils 44, 44' gezielt in Richtung eines mittleren Bereiches der Umfangsfläche des zweiten Zahnrades 18 geleitet bzw. abgelenkt wird. Die erste Leitfläche 54, 54` des zweiten Deflektorteils 44, 44' mündet zudem angrenzend zum Wälzbereich 36 und bewirkt, dass das durch die erste Leitfläche 54, 54` abgelenkte Schmiermittel gezielt in den Wälzbereich 36 geleitet wird.

Der zweite Deflektorteil 44, 44' umfasst zudem einen Defklektorbereich mit einer weiteren Leitfläche 56, 56', die sich ausgehend von der ersten Leitfläche 54, 54' entgegen der Drehrichtung abgewinkelt in Richtung der umfangsseitigen Gehäusewandung erstreckt bzw. in eine vom Wälzbereich 36 abgewandte Richtung verläuft und einen stumpfen Winkel mit der ersten Leitfläche 54, 54' einschließt. Der die weitere Leitfläche 56, 56` umfassende Defklektorbereich des zweiten Deflektorteils 44, 44' trennt damit wenigstens teilweise einen das erste Zahnrad 16 umgebenden Gehäusebereich 40 von einem das zweite Zahnrad 18 umgebenden Gehäusebereich 50, bzw. grenzt die beiden Gehäusebereiche 40, 50 wenigstens teilweise voneinander ab. Die weitere Leitfläche 56, 56' bewirkt, dass seitens des zweiten Zahnrads 18 in Drehrichtung transportiertes Schmiermittel im Wesentlichen nicht in den Gehäusebereich 40 des ersten Zahnrades 16 gelangt. Der Eintritt von seitens des zweiten Zahnrads 18 in Drehrichtung transportiertem Schmiermittel in den das erste Zahnrad 16 umgebenden Gehäusebereich 40 wird dadurch größtenteils blockiert oder verhindert bzw. maßgeblich reduziert. Die weitere Leitfläche 56, 56' mündet zudem, ähnlich zu der ersten Leitfläche 54, 54', ebenfalls angrenzend zum Wälzbereich 36 und bewirkt, dass das durch die weitere Leitfläche 56, 56' in die Mitte der Umfangsfläche des zweiten Zahnrads abgelenkte Schmiermittel gezielt in den Wälzbereich 36 geleitet wird.

Insgesamt wird das durch Rotation des Zahnrads 18 in Richtung des Wälzbereichs 36 transportierte Schmiermittel durch die Deflektorteile 42, 42', 44, 44' maßgeblich geblockt, abgelenkt und/oder gezielt geleitet. Das Maß, mit welchem die Deflektorteile 42, 42`, 44, 44` über den Umfangsbereich ragen, kann dabei variieren und hängt davon ab, wieviel des durch Rotation transportierten Schmiermittels abgelenkt bzw. blockiert werden soll. Die Deflektorteile 42, 42', 44, 44' können als Leitbleche, Stege, Finger, Blende oder Flügel ausgebildet sein, oder eine andere Art von Profil bilden.

Der erste Deflektorteil 42, 42` ist in Drehrichtung des zweiten Zahnrads 18 vor dem zweiten Deflektorteil 44, 44' angeordnet. Eine Teilmenge an Schmiermittel, welche durch Rotation des zweiten Zahnrads 18 in Richtung des ersten Deflektorteils 42, 42' transportiert wird, jedoch an diesem vorbei gelangt, wird zumindest teilweise durch den zweiten Deflektorteil 44, 44' abgelenkt und dadurch zum einen entlang der ersten Leitfläche 54, 54' in Richtung des Wälzbereiches 36, und zum anderen entlang der weiteren Leitfläche 56, 56' in Richtung des Wälzbereiches 36 und in Richtung der umfangsseitigen Gehäusewandung 28, 30 geleitet. Letzteres bewirkt, dass eine wesentliche Menge an Schmiermittel reduziert wird, die in den das erste Zahnrad 16 umgebenden Gehäusebereich 40 gelangt.

Zwischen der ersten und der zweiten Deflektoranordnung 39, 39` ist an den freien Enden des jeweiligen ersten und/oder zweiten Deflektorteils 42, 42`, 44, 44` ein Durchlassspalt 58, 60 ausgebildet und so bemessen, dass eine zur Schmierung ausreichende Teilmenge an Schmiermittel in den Wälzbereich 36 gelangt. Wie oben bereits erwähnt, kann die Größe bzw. Weite des Durchlassspalts 58, 60 von Fall zu Fall variieren und kann auf die konstruktiven Gegebenheiten und Erfordernisses des Stirnradgetriebes 10 angepasst sein. Es kann demnach zweckmäßig sein, einen Durchlassspalt 58 zwischen den ersten Deflektorteilen 42, 42' vorzusehen, durch welchen eine erste Teilmenge an aufgewirbelten und vom ersten Zahnrad 18 in Drehrichtung transportiertes Schmiermittel ungehindert passieren kann, während eine zweite Teilmenge von den Leitflächen 52, 52` der ersten Deflektorteile 42, 42' in Richtung der stirnseitigen Gehäusewandungen 24, 26 abgeleitet wird. Eine weitere Teilmenge gelangt mehr oder weniger ungehindert über die ersten Deflektorteile 42, 42' hinweg in einen Umfangsbereich 62 des zweiten Zahnrads 18 der zwischen den ersten und zweiten Deflektorteilen 42, 42', 44, 44' ausgebildet ist. Die den Durchlassspalt 58 passierte Teilmenge an Schmiermittel, sowie die Teilmenge an Schmiermittel die über die ersten Deflektorteile 42, 42' hinweg gelangt, sammelt sich somit in dem genannten Umfangsbereich 62 des zweiten Zahnrads 18, der zwischen den ersten und zweiten Deflektorteilen 42, 42`, 44, 44` ausgebildet ist. Die beiden Teilmengen an Schmiermittel die in diesem Umfangsbereich 62 gelangen, werden durch die Drehbewegung des zweiten Zahnrads 18 den zweiten Deflektorteilen 44, 44' zugeführt und dort, wie oben beschrieben, zu einem Mindestteil, durch die ersten und weiteren Leitflächen 54, 54', 56, 56` der zweiten Deflektorteile 44, 44` und durch den dort vorgesehenen Durchlassspalt 60 zwischen den Deflektorteilen 44, 44', gezielt in Richtung des Wälzbereiches 36 geleitet. Ein Restteil wird dabei, wie oben beschrieben, durch die weiteren Leitflächen 56, 56` der zweiten Deflektorteile 44, 44' in Richtung der umfangseitigen Gehäusewandung28, 30 abgelenkt. Somit gelangt nur ein limitierter Mindestteil an Schmiermittel gezielt in den Wälzbereich 36. Durch Anpassung der Geometrie der Deflektorteile 42, 42`, 44, 44`, insbesondere der Länge, Höhe, Form und Abwinkelung oder Ausrichtung zum jeweiligen Befestigungsteil 46, 46' bzw. Abwinkelung oder Ausrichtung zu den stirnseitigen und umfangsseitigen Gehäusewandungen 24, 26, 28, 30, sowie durch Anpassung des Durchlassspalts 58, 60 kann die in den Wälzbereich 36 geführte Mindestteilmenge gezielt festgelegt, eingestellt und auf eine zur Schmierung des Stirnradgetriebes 10 notwendige Menge begrenzt werden.

## Patentansprüche

1. Stirnradgetriebe (10), mit einem ersten Zahnrad (16) und einem zweiten Zahnrad (18), wobei die Zahnräder (16, 18) in einem Wälzbereich (36) miteinander in Eingriff stehen und auf parallel zueinander ausgerichteten Drehachsen (20, 22) geführt werden, und einem Getriebegehäuse, mit die Zahnräder stirnseitig und umfangsseitig umschließenden Gehäusewandungen (24, 26, 28, 30), wobei das Getriebegehäuse zumindest teilweise mit Schmierflüssigkeit befüllbar ist und wobei das zweite Zahnrad (18) rotierend durch die Schmierflüssigkeit führbar und Schmierflüssigkeit in Richtung des Wälzbereichs (36) beförderbar ist, **dadurch gekennzeichnet, dass** bezogen auf den Drehsinn der Zahnräder (16, 18) unmittelbar vor dem Wälzbereich (36) wenigstens eine Deflektoranordnung (38, 39, 39') angeordnet ist, derart ausgebildet, dass eine Teilmenge der durch das zweite Zahnrad (18) zum Wälzbereich (36) beförderbaren Schmierflüssigkeit in Richtung wenigstens einer der stirnseitig die Zahnräder (16, 18) umgebenden Gehäusewandung (24, 26) abgeleitet wird.

2. Stirnradgetriebe (10) nach Anspruch 1, **dadurch gekennzeichnet, dass** die Deflektoranordnung (38, 39, 39') einen an einer stirnseitigen Gehäusewandung (24, 26) gehalterten Befestigungsbereich (46, 46') aufweist.

3. Stirnradgetriebe (10) nach Anspruch 2, **dadurch gekennzeichnet, dass** sich ausgehend vom Befestigungsbereich (46, 46') wenigstens ein Deflektorteil erstreckt, der über die Umfangsfläche des zweiten Zahnrads ragt.

4. Stirnradgetriebe (10) nach Anspruch 3, **dadurch gekennzeichnet, dass** der wenigstens eine Deflektorteil einen ersten Deflektorteil (42, 42') mit einer senkrecht zur Umfangsfläche des zweiten Zahnrads (18) ausgerichteten Leitfläche (52, 52') aufweist, wobei die Leitfläche (52, 52') des ersten Deflektorteils (42, 42'), ausgehend vom Befestigungsteil (46, 46') entgegen der Drehrichtung des zweiten Zahnrades (18) verlaufend, einen spitzen Winkel (A, A') mit der stirnseitigen Gehäusewandung (24, 26) einschließt.

5. Stirnradgetriebe (10) nach Anspruch 3 oder 4, **dadurch gekennzeichnet, dass** der wenigstens eine Deflektorteil einen zweiten Deflektorteil (44, 44') mit einer ersten, senkrecht zur Umfangsfläche des zweiten Zahnrads (18) ausgerichteten Leitfläche (54, 54') aufweist, wobei die erste Leitfläche (54, 54') des zweiten Deflektorteils (44, 44'), ausgehend vom Befestigungsteil (46, 46') in Drehrichtung des zweiten Zahnrades (18) verlaufend, einen stumpfen Winkel (B, B') mit der stirnseitigen Gehäusewandung (24, 26) einschließt.

6. Stirnradgetriebe (10) nach Anspruch 5, **dadurch gekennzeichnet, dass** der zweite Deflektorteil (44, 44') einen Defklektorbereich mit einer weiteren Leitfläche (56, 56') umfasst, die sich ausgehend von der ersten Leitfläche (54, 54') des zweiten Deflektorteils (44, 44') abgewinkelt in Richtung der umfangsseitigen Gehäusewandung (28, 30) erstreckt und einen stumpfen Winkel (C, C') mit der ersten Leitfläche (54, 54') des zweiten Deflektorteils (44, 44') einschließt.

7. Stirnradgetriebe (10) nach Anspruch 6 oder 7, **dadurch gekennzeichnet, dass** der die weitere Leitfläche (56, 56') umfassende Deflektorbereich des zweiten Deflektorteils (44, 44') einen das erste Zahnrad (16) umgebenden Getrieberaum (40) von einem das zweite Zahnrad (18) umgebenden Getrieberaum (50) wenigstens teilweise abgrenzt.

8. Stirnradgetriebe (10) nach einem der Ansprüche 5 bis 7, **dadurch gekennzeichnet, dass** der erste Deflektorteil (42, 42') in Drehrichtung des zweiten Zahnrads (18) vor dem zweiten Deflektorteil (44, 44') angeordnet ist.

9. Stirnradgetriebe (10) nach einem der Ansprüche 1 bis 8, **dadurch gekennzeichnet, dass** die wenigstens eine Deflektoranordnung (38, 39, 39') eine erste und eine zweite Deflektoranordnung (39, 39') umfasst, wobei die beiden Deflektoranordnungen (39, 39') im wesentlichen spiegelsymmetrisch ausgebildet und gegenüberliegend jeweils an einer der stirnseitig die Zahnräder (16, 18) umgebenden Gehäusewandungen (24, 26) angeordnet sind.

10. Stirnradgetriebe (10) nach Anspruch 9, **dadurch gekennzeichnet, dass** zwischen der ersten und der zweiten Deflektoranordnung (39, 39') an den freien Enden des jeweiligen ersten und/oder zweiten Deflektorteils (42, 42', 44, 44') ein Durchlassspalt (58, 60) ausgebildet ist.
